(19) **Europäisches Patentamt**

**European Patent Office**

**Office européen des brevets**

(11) **EP 0 897 371 B1**

(12) **EUROPÄISCHE PATENTSCHRIFT**

(45) Veröffentlichungstag und Bekanntmachung des Hinweises auf die Patenterteilung:
**24.01.2001 Patentblatt 2001/04**

(21) Anmeldenummer: 97916300.3

(22) Anmeldetag: **21.04.1997**

(51) Int Cl.⁷: $B66B\ 1/32$, B66D 5/30

(86) Internationale Anmeldenummer:
**PCT/CH97/00161**

(87) Internationale Veröffentlichungsnummer:
**WO 97/42118 (13.11.1997 Gazette 1997/49)**

(54) **VERFAHREN UND EINRICHTUNG ZUR STEUERUNG EINER AUFZUGSBREMSE**

METHOD AND DEVICE FOR CONTROLLING A LIFT BRAKE

PROCEDE ET DISPOSITIF POUR COMMANDER UN FREIN D'ASCENSEUR

(84) Benannte Vertragsstaaten:
**AT CH DE ES FI FR GB IT LI SE**

(30) Priorität: **08.05.1996 US 643460**

(43) Veröffentlichungstag der Anmeldung:
**24.02.1999 Patentblatt 1999/08**

(73) Patentinhaber: **INVENTIO AG**
**CH-6052 Hergiswil (CH)**

(72) Erfinder: **RAMOS, Julio, C.**
**Lake Hiawatha, NJ 07034 (US)**

(56) Entgegenhaltungen:
**US-A- 4 368 501**      **US-A- 4 739 969**

• **PATENT ABSTRACTS OF JAPAN vol. 95, no. 001 & JP 07 002441 A (MITSUBISHI ELECTRIC CORP), 6.Januar 1995,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Einrichtung zur Steuerung einer Aufzugsbremse mit einem Gehäuse und einem beweglichen Teil, der mittels einer Federkraft mindestens einer Feder und mittels einer elektromagnetischen Kraft mindestens einer Spule auf einem Weg zwischen einer Bremslage und einer Ausgangslage gesteuert bewegt wird.

Aufzugsbremsen müssen einerseits im Notfall rasch ansprechen und die Aufzugskabine und das Gegengewicht unverzüglich stillsetzen, andererseits müssen die Aufzugsbremsen möglichst ruhig arbeiten, damit die beim Ansprechen der Aufzugsbremse entstehenden Geräusche in den an den Maschinenraum angrenzenden Räumen nicht störend wirken. Bekannte Aufzugsbremsen weisen mindestens eine eine Bremskraft erzeugende Feder auf, wobei eine elektromagnetische Vorrichtung mit mindestens einer Spule entgegen der Federkraft arbeitet und dabei die Bremse löst. Wenn die Spannung an der Spule abgeschaltet wird, bricht das Magnetfeld zusammen, wobei die Bremsplatte unter Einwirkung der Federkraft bis zum Aufprall mit der zu bremsenden beispielsweise an der Motorwelle angeordneten Gegenplatte beschleunigt wird. Beim gegenseitigen Kontakt der Platten entstehen die oben genannten störenden Aufprallgeräusche. Zur Abhilfe sind Lösungen aus der Praxis bekannt geworden, bei denen Widerstände in den Freilaufpfad der Spule zur Beeinflussung des Feldabbaus eingebaut worden sind. Diese Massnahme hat einen weicheren Aufprall der Platten und dadurch geringere Aufprallgeräusche zur Folge. Nachteilig dabei ist aber, dass die Ansprechzeit der Bremse verlängert wird, was insbesondere bei einem Nothalt aus Sicherheitsgründen nicht akzeptabel ist.

Aus der Patentschrift US 4 739 969 ist eine Bremse für einen Aufzugsantrieb bekannt geworden, die mit einem Flusssensor und alternativ mit einem Positionssensor ausgerüstet ist. Für eine ruckfreie Betätigung der Bremse wird der magnetische Fluss in der Bremse gemessen und verändert. Mit dem alternativ zum Flusssensor verwendeten Positionssensor wird der Fluss in der Bremse aufgrund der Position des Bremsarmes verändert.

Nachteilig bei dieser Einrichtung ist, dass der Bremsarm insbesondere in der Endbewegung, in der die störenden Schliessgeräusche entstehen, über den Magnetfluss nicht präzise kontrollierbar ist.

Hier will die Erfindung Abhilfe schaffen. Die Erfindung, wie sie im Anspruch 1 gekennzeichnet ist, löst die Aufgabe, die Nachteile der bekannten Einrichtung zu vermeiden und eine Bremseinrichtung zu schaffen, mit der die Bremsgeräusche vermindert und die Ansprechzeit der Bremse minimiert werden.

Die durch die Erfindung erreichten Vorteile sind im wesentlichen darin zu sehen, dass mechanische Toleranzen, unterschiedliche mechanische Einstellungen der Bremse und die Abnutzung der Bremsbeläge erfasst und beim Bremsvorgang berücksichtigt werden und dadurch eine von der Bremse unabhängige immer gleich bleibende Bremsung der Aufzugskabine und des Gegengewichtes gewährleistet wird. Weiter vorteilhaft ist, dass keine besonderen Massnahmen zur Schallisolation des Maschinenraumes zu ergreifen sind.

Im folgenden wird die Erfindung anhand von lediglich einen Ausführungsweg darstellenden Zeichnungen näher erläutert. Es zeigen:

Fig. 1     eine erfindungsgemässe Bremseinrichtung mit einem Potentiometer zur Lageüberwachung einer mittels Feder und Spule betätigbaren Bremseinrichtung,

Fig. 2     einen Schaltkreis zur Steuerung des mittels der Bremseinrichtung ausgeführten Bremsvorganges,

Fig. 3     einen Geschwindigkeitsverlauf einer federbeaufschlagten Bremseinrichtung,

Fig. 4     einen idealen Geschwindigkeitsverlauf einer Bremseinrichtung,

Fig. 5     einen zur Steuerung der Bremseinrichtung notwendigen Kraftverlauf und

Fig. 6     einen von der Spule aufzubringenden Kraftverlauf.

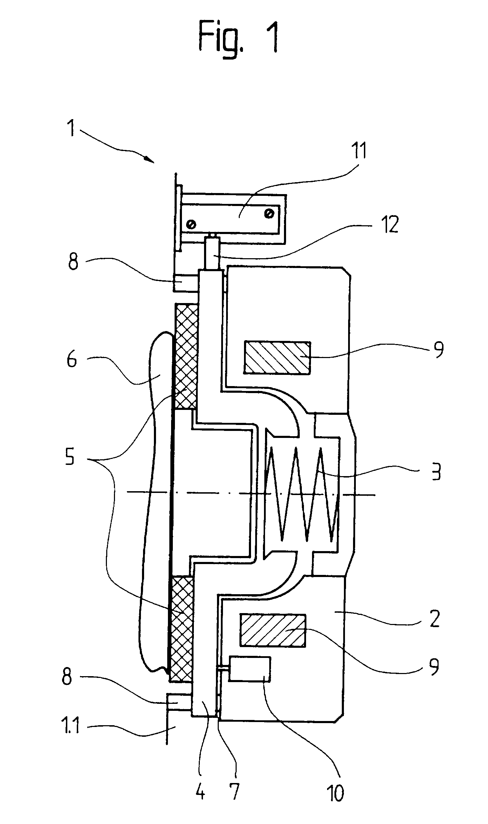

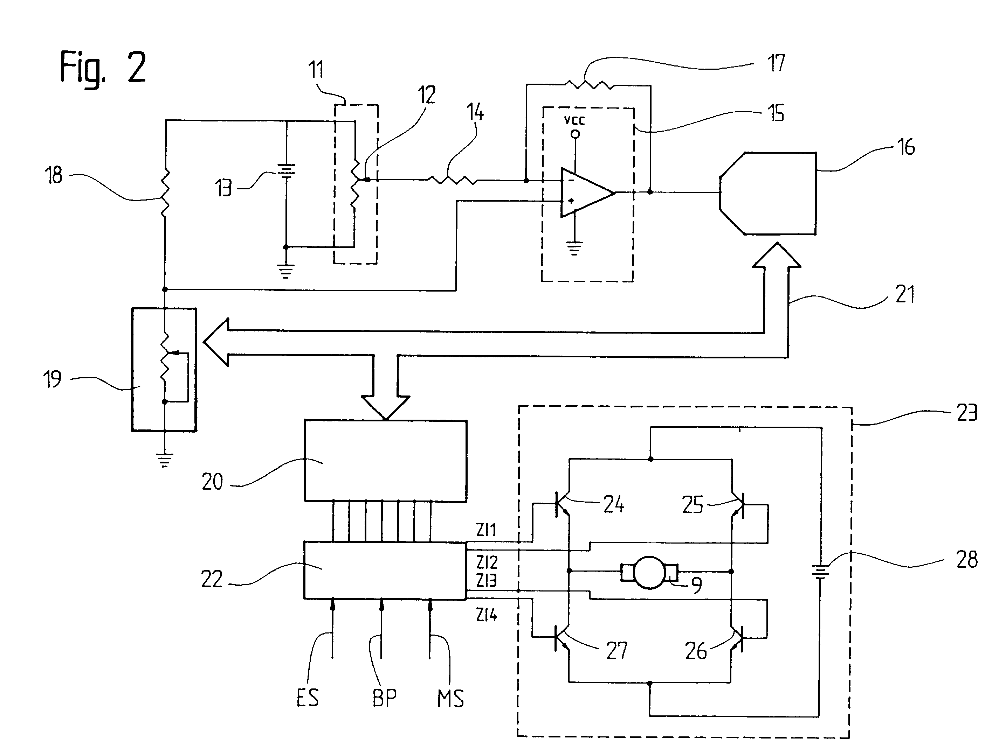

In den Fig. 1 und 2 ist mit 1 eine an einem Maschinenrahmen 1.1 angeordnete Scheibenbremse bezeichnet, bei der eine in einem ortsfesten Gehäuse 2 angeordnete Feder 3 mit einer Federkraft auf eine bewegliche Trägerplatte 4 einwirkt und dabei diese in einer Bremslage hält, wobei an der Trägerplatte 4 angeordnete Bremsbeläge 5 gegen eine beispielsweise an einer nicht dargestellten Motorwelle angeordnete Bremsscheibe 6 gepresst werden. Ein mit 7 bezeichneter Luftspalt zwischen Gehäuse 2 und Trägerplatte 4 entspricht dem zurückgelegten Weg der mittels peripheren Führungsbolzen 8 geführten Trägerplatte 4 nachdem eine im Gehäuse 2 angeordnete Spule 9 deaktiviert wurde. Bei aktivierter Spule 9 wirkt die elektromagnetische Kraft der Spule 9 der Federkraft entgegen. Dabei wird die Trägerplatte 4 in die Ausgangslage gebracht, die mittels eines Mikroschalters 10 überwacht wird. Der Luftspalt 7 entspricht dem zurückgelegten Weg der Trägerplatte 4 zwischen der Ausgangslage und der Bremslage. Zur Lageüberwachung der Trägerplatte 4 ist ein am Maschinenrahmen 1.1 angeordnetes als Weggeber dienendes Potentiometer 11 mit einem Schleifer 12 vorgesehen, der mittels der Trägerplatte 4 bewegt wird. Der Ausgangswiderstand des als Weggeber dienenden Potentiometers 11, 12 ändert sich somit linear mit der Bewegung der Trägerplatte 4.

Nicht dargestellt ist die zweite Scheibenbremse, die an der gegenüberliegenden Bremsseite der Bremsscheibe 6 angeordnet ist. Lageüberwachung des beweglichen Teils mit den Bremsbelägen kann beispielsweise auch bei im Aufzugsbau eingesetzten Bakkenbremsen oder Trommelbremsen angewendet werden.

Fig. 2 zeigt den Schaltkreis zur Steuerung des mittels der Bremseinrichtung ausgeführten Bremsvorganges. Das als Weggeber dienende an der Scheibenbremse 1 angeordnete Potentiometer 11, 12 ist an einer ersten Spannungsquelle 13 angeschlossen. Der mittels Trägerplatte 4 bewegbare Schleifer 12 des Potentiometer 11 greift eine der Schleiferstellung entsprechende Referenzspannung am Potentiometer 11 ab, die an einen Eingangswiderstand 14 gelegt wird. Der Eingangswiderstand 14 ist an den -Eingang eines Differenzverstärkers 15 angeschlossen, dessen Ausgang an einen Analog/Digital-Wandler 16 angeschlossen ist und mittels eines Rückführwiderstandes 17 an den -Eingang angeschlossen ist. Das Verhältnis von Rückführwiderstand 17 zu Eingangswiderstand 14 ist massgeblich für den Verstärkungsfaktor des Differenzverstärkers 15. Der +Eingang des Differenzverstärkers 15 ist an einem mittels eines Spannungsteilerwiderstandes 18 und eines digitalen Potentiometers 19 gebildeten Spannungsteiler angeschlossen. Das digitale Potentiometer 19 wird von einem Rechner 20 gesteuert und funktioniert vergleichbar mit einem schaltbaren Widerstandsnetzwerk. Der Rechner 20 kann über einen Datenbus 21 den Widerstandswert des digitalen Potentiometers 19 vergrössern oder verkleinern. Die am Spannungsteiler eingestellte und am +Eingang anstehende Spannung dient als Offsetspannung für den Differenzverstärkers 15. Befindet sich die Trägerplatte 4 beispielsweise in der Bremslage, so ändert der Rechner 20 die Offsetspannung mittels digitalem Potentiometer 19 solange bis am Ausgang des Analog/Digital-Wandlers 16 eine vom Rechner 20 über den Datenbus 21 gemessene minimale Spannung erscheint. Dieser Einstellvorgang wird automatisch durchgeführt und periodisch wiederholt.

In Fig. 2 wird die Verstärkung des Differenzverstärkers 15 mittels Rückführwiderstand 17 und Eingangswiderstand 14 eingestellt. Nicht dargestellt ist eine Variante zur automatischen Einstellung der Verstärkung des Differenzverstärkers 15 mittels Rechner 20. Beispielsweise kann anstelle des Rückführwiderstandes 17 ein vom Rechner 20 gesteuertes digitales Potentiometer verwendet werden. Je nach Spannungsdifferenz zwischen Bremslage und Ausgangslage der Trägerplatte 4 am Schleifer 12 des Potentiometers 11 kann der Rechner 20 die Verstärkung des Differenzverstärkers 15 bei kleinem Luftspalt 7 vergrössern und bei grossem Luftspalt 7 verkleinern. Damit lässt sich die Wegauflösung optimieren.

Eine Schnittstelle 22 verbindet den Rechner 20 mit dem Mikroschalter 10, mit einer nicht dargestellten übergeordneten Aufzugssteuerung und mit einem Leistungsteil 23. Der Mikroschalter 10 erzeugt in der Ausgangslage der Trägerplatte 4 ein Lagesignal MS, aufgrund dessen der Rechner 20 die Spulensteuerung initialisiert und weiter unten beschriebene Optimierungen vornimmt. Die übergeordnete Aufzugssteuerung gibt den Befehl für die Bremslüftung mittels eines Bremssignals BP und den Befehl für einen Nothalt mittels eines Notstopsignals ES. Der Rechner 20 steuert mittels der Schnittstelle 22 den Leistungsteil 23, der aus einem ersten Schalter 24, einem zweiten Schalter 25, einem dritten Schalter 26, einem vierten Schalter 27 und einer zweiten Spannungsquelle 28 besteht. Die Schalter 24, 25, 26, 27, beispielsweise Schalttransistoren, sind zu einer H-Brücke zusammengeschaltet, wobei die Spule 9 den Querzweig des Hs bildet. Von der Schnittstelle 22 erzeugte Zündsignale ZI1, ZI2, ZI3 und ZI4 schalten die Schalter 24, 25, 26 und 27 ein und aus.

Sobald ein von der übergeordneten Aufzugssteuerung abgesetztes Bremssignal BP an der Schnittstelle 22 ansteht, wird die Spule 9 mittels eines Schalterpaars 24, 26; 25, 27 an die zweite Spannungsquelle 28 angeschlossen, wobei die elektromagnetische Kraft der Spule 9 der Federkraft der Feder 3 entgegenwirkt und die Trägerplatte 4 in die Ausgangslage bringt, in der die Trägerplatte 4 den Mikroschalter 10 betätigt. Der betätigte Mikroschalter 10 erzeugt das Lagesignal MS, aufgrund dessen die volle Spulenspannung der Spule 9 auf eine Haltespannung reduziert wird, weil zur Bremslüftung eine etwa 30% höhere Spulenspannung notwendig ist als zum Halten der Trägerplatte 4 in der Ausgangslage.

Sobald das Bremssignal BP deaktiviert wird, wird das Schalterpaar 24, 26; 25, 27 in Abhängigkeit des weiter unten erläuterten Geschwindigkeit/Lage-Profils mit unterschiedlichen langen Pulsen eingeschaltet und ausgeschaltet. Die Trägerplatte 4 wird dabei nicht wie herkömmlich von der Federkraft der Feder 3 beschleunigt, sondern von einer aus Federkraft der Feder 3 und elektromagnetischer Kraft der Spule 9 resultierenden Kraft von der Ausgangslage in die Bremslage bewegt, wobei sich die Trägerplatte 4 auf ihrem Weg mit höherer Geschwindigkeit und kurz vor dem Aufprall mit einer kleinen Geschwindigkeit bewegt. Bei einem Notstopsignal ES wird mittels der Spule 9 ein die Federkraft der Feder 3 unterstützendes Magnetfeld erzeugt und der Kontakt zwischen den Bremsbelägen 5 und der Bremsscheibe 6 unverzüglich hergestellt.

Wie oben bereits angedeutet, kann sich die Bremseinrichtung selbst kalibrieren und Abweichungen beim Bremsvorgang zufolge Bauteiletoleranzen, Temperatureinflüssen, Abnutzung der Bremsbeläge und Ungenauigkeiten in der Einstellung auskorrigieren. In der Bremslage der Trägerplatte 4 verändert der Rechner 20 periodisch den Widerstandswert des digitalen Potentiometers 19 und somit die Offsetspannung des Differenzverstärkers 15 bis eine minimale Spannung am Ausgang des Analog/Digital-Wandlers erscheint. In der mittels Mikroschalter 10 überwachten Ausgangslage der Trägerplatte 4 wird der Spannungswert des Analog/Digital-Wandler Ausganges gespeichert und für den Feinabgleich und/oder Verbesserung des Geschwindigkeit/Lage-Profils verwendet, sodass im Vergleich mit dem vorhergehenden Bremseinsatz die Geschwindigkeit der Trägerplatte 4 und somit der Bremsbeläge 5 vor dem Aufprall mit der Bremsscheibe 6 weiter optimiert wird. Bei der Optimierung geht der Rechner 20 vom aufgezeichneten Geschwindigkeit/Lage-Profil des vorhergehenden Bremseinsatzes aus. Beim ersten Bremseinsatz wird die Trägerplatte 4 lediglich unter Einwirkung der Federkraft der Feder 3 von der Ausgangslage in die Bremslage bewegt und dabei die Bewegung aufgezeichnet.

In einer weiteren Ausführungsvariante kann die Bewegung der Trägerplatte 4 auch von der Bremslage in die Ausgangslage in Abhängigkeit eines Geschwindigkeit/Lage-Profils gesteuert werden, wobei ein langsames Lösen der Bremse ein ruckfreies Anfahren der Aufzugskabine gewährleistet und ein sanftes Einfahren der Trägerplatte 4 in die Ausgangslage den Mikroschalter 10 und das Potentiometer 11, 12 mechanisch weniger beansprucht.

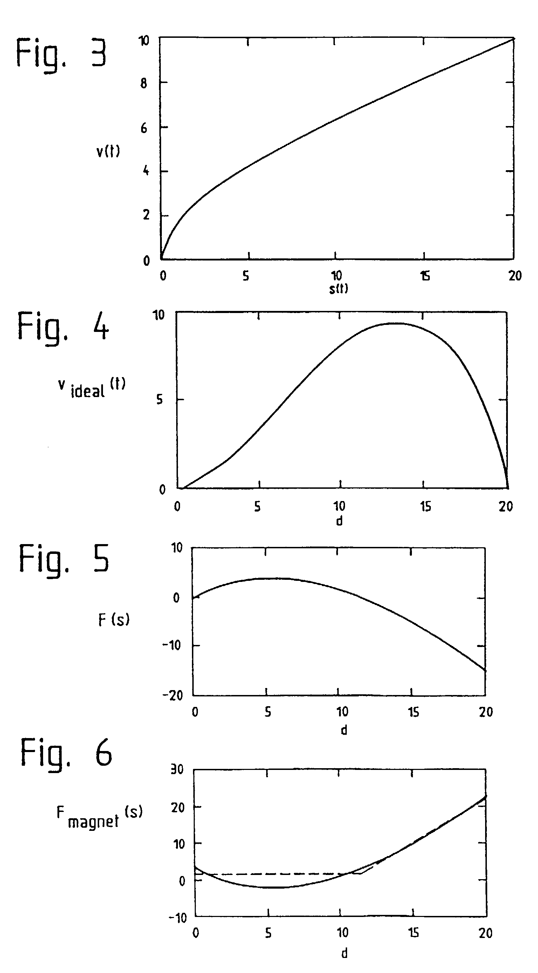

Ein Geschwindigkeit/Lage-Profil der Trägerplatte 4 ohne Einwirkung einer elektromagnetischen Kraft ist in Fig. 3 dargestellt. Die konstante Federkraft der Feder 3 bewegt die Trägerplatte 3 von ihrer Ausgangslage bis zum Aufprall der Bremsbeläge 5 mit der Bremsscheibe 6 mit einer konstanten Beschleunigung. Fig. 3 zeigt unter diesen Voraussetzungen den Geschwindigkeitsverlauf in Abhängigkeit des Weges ge-mäss folgenden Bewegungsgleichungen:

$$s(t) = ½·a·t^2 \qquad [1]$$

$$v(t) = (2·a·s(t))^{½} \qquad [2]$$

wobei s der Weg, a die Beschleunigung, v die Geschwindigkeit und t die Zeit ist.

Wie in Fig. 4 dargestellt steigt bei einem idealen Geschwindigkeit/Lage-Profil die Geschwindigkeit der Trägerplatte 4 nach dem Verlassen der Ausgangslage steil an und fällt vor dem Aufprall auf eine kleine Geschwindigkeit ab und kann beispielsweise mit einer Polynomfunktion wie mit Gleichung [3] gezeigt angenähert werden. In Fig. 4 ist mit d der zurückgelegte Weg der Trägerplatte 4 bezeichnet. Der total zurückgelegte Weg d entspricht dem Luftspalt 7 der Fig. 1.

$$v_{ideal}(s) = - s^3 + 4·s^2 \qquad [3]$$

Der Rechner 20 braucht demzufolge lediglich diese einfache Geschwindigkeitsreferenz zu generieren und damit die Zündsignale ZI1, ZI2, ZI3 und ZI4 zu steuern. Falls die Ist-Geschwindigkeit der Trägerplatte 4 unter die Referenzgeschwindigkeit fällt, wird der Leistungsteil 23 positiv ausgesteuert, sodass die magnetische Kraft der Spule 5 die Federkraft der Feder 3 unterstützt. Falls die Ist-Geschwindigkeit die Referenzgeschwindigkeit übersteigt, wird der Leistungsteil 23 negativ ausgesteuert, sodass die magnetische Kraft der Spule 5 der Federkraft der Feder 3 entgegenwirkt.

Fig. 5 und Fig. 6 zeigen ein Kraft/Weg-Profil zur Einhaltung des mit der Gleichung [3] beschriebenen Geschwindigkeitsverlaufs der Trägerplatte 4. In Fig. 5 ist mit d der zurückgelegte Weg der Trägerplatte 4 bezeichnet. Der total zurückgelegte Weg d entspricht dem Luftspalt 7 der Fig. 1. Der Kraftverlauf kann durch Ableiten der Gleichung [3] angenähert werden:

$$F(s) = d/ds (- s^3 + 4·s^2) \qquad [4]$$

$$F(s) = - 3·s^2 + 8·s \qquad [5]$$

Die notwendige Kraft setzt sich aus der konstanten Federkraft der Feder 3 und der magnetischen Kraft der Spule 9 zusammen. Die magnetische Kraft der Spule 9 kann aus diesem Zusammenhang nach der Gleichung

$$F_{magnet}(s) = F_{feder} - F(s) \qquad [6]$$

berechnet werden und wie in Fig. 6 mit unterbrochener Linie dargestellt abschnittsweise linearisiert werden. In Fig. 6 ist mit d der zurückgelegte Weg der Trägerplatte 4 bezeichnet. Der total zurückgelegte Weg d entspricht dem Luftspalt 7 der Fig. 1.

**Patentansprüche**

1.   Verfahren zur Steuerung einer Aufzugsbremse mit einem Gehäuse (2) und einem beweglichen Teil (4, 5), der mittels einer Federkraft mindestens einer Feder (3) und mittels einer elektromagnetischen Kraft mindestens einer Spule (9) auf einem Weg zwischen einer Bremslage und einer Ausgangslage gesteuert bewegt wird,
dadurch gekennzeichnet,
dass ein Geschwindigkeit/Lage-Profil für den Weg zwischen der Bremslage und der Ausgangslage erzeugt wird, nach dem der bewegliche Teil (4, 5) gesteuert wird.

2.   Verfahren nach Anspruch 1,
dadurch gekennzeichnet,
dass die momentane Lage des beweglichen Teils (4, 5) mittels Weggeber (11, 12) erfasst wird und bei Abweichungen vom Geschwindigkeit/Lage-Profil korrigiert wird.

**3.** Verfahren nach Anspruch 2,
dadurch gekennzeichnet,
dass in der Bremslage des beweglichen Teils (4, 5) ein Nullabgleich des Weggebers (11, 12) mittels eines Offsetsignals durchgeführt wird und dass die Auflösung des Weggebersignals in Abhängigkeit des Weges (7) zwischen der Bremslage und der Ausgangslage erfolgt.

**4.** Verfahren nach einem der vorhergehenden Ansprüche,
dadurch gekennzeichnet,
dass ein Kraft/Weg-Profil in Abhängigkeit des Geschwindigkeit/Weg-Profils für die Spule (9) erzeugt wird, deren Kraft die Federkraft der Feder (3) je nach Art des Bremsbefehls und je nach Lage des beweglichen Teils (4, 5) unterstützt oder schwächt.

**5.** Bremseinrichtung zur Durchführung des Verfahrens nach den Ansprüchen 1 bis 4,
dadurch gekennzeichnet,

dass ein Rechner (20) vorgesehen ist, an dem ein digitales Potentiometer (19), ein Analog/Digital-Wandler (16) und eine Schnittstelle (22) mit einem die Spule (9) speisenden Leistungsteil (23) angeschlossen sind,
dass ein Differenzverstärker (15) vorgesehen, der das Offsetsignal des digitalen Potentiometers (19) und das Lagesignal des Weggebers (11, 12) addiert und verstärkt und
dass der Differenzverstärker (15) am Ausgang mit dem Analog/Digital-Wandler (16) verbunden ist.

**6.** Bremseinrichtung nach Anspruch 5,
dadurch gekennzeichnet,
dass der Leistungsteil (23) Schalterpaare (24, 26; 25, 27) aufweist, die die Spule (9) mit einer Spannung zur Erzeugung einer die Federkraft beeinflussenden magnetischen Kraft beaufschlagen.

**7.** Bremseinrichtung nach Anspruch 5,
dadurch gekennzeichnet,

dass die Schnittstelle (22) mit einem Schalter (10) verbunden ist, der die Ausgangslage des beweglichen Teils (4, 5) überwacht und
dass die Schnittstelle (22) mit einer Aufzugssteuerung verbunden ist, die mit einem Bremssignal (BP) oder einem Notstopsignal (ES) die Bewegung des beweglichen Teils (4, 5) auslöst.

**Claims**

**1.** Method of controlling a lift brake with a housing (2) and a movable part (4, 5) which is moved in controlled manner on a path between a braking position and a starting position by means of a spring force of at least one spring (3) and by means of an electromagnetic force of at least one coil (9), characterised in that a speed/position profile for the path between the braking position and the starting position is produced, in accordance with which the movable part (4, 5) is controlled.

**2.** Method according to claim 1, characterised in that the instantaneous position of the movable part (4, 5) is detected by means of a travel transmitter (11, 12) and is corrected in response to deviations from the speed/position profile.

**3.** Method according to claim 2, characterised in that in the braking position of the movable part (4, 5) a zero balancing of the travel transmitter (11, 12) is carried out by means of an offset signal and that the triggering of the travel transmitter signal takes place in dependence on the path (7) between the braking position and the starting position.

**4.** Method according to one of the preceding claims, characterised in that a force/travel profile is produced in dependence on the speed/travel profile for the coil (9), the force of which assists or weakens the spring force of the spring (3) according to the respective form of braking command and according to the respective position of the movable part (4, 5).

**5.** Braking equipment for carrying out the method according to claims 1 to 4, characterised in that a computer (20) is provided, to which are connected a digital potentiometer (12), an analog-to-digital converter (16) and an interface (22) with a power unit (23) supplying the coil (9), that a sum-and-difference amplifier (15) is provided, which adds and amplifies the offset signal of the digital potentiometer (19) and the position signal of the travel transmitter (11, 12) and that the sum-and-difference amplifier (15) is connected at the output with the analog-to-digital converter (16).

**6.** Braking equipment according to claim 5, characterised in that the power unit (23) comprises switch pairs (24, 26, 25, 27), which apply to the coil (9) a voltage for generation of a magnetic force influencing the spring force.

**7.** Braking equipment according to claim 5, characterised in that the interface (22) is connected with a switch (10), which monitors the starting position of the movable part (4, 5) and that the interface (22) is connected with a lift control which triggers the movement of the movable part (4, 5) by a braking signal (BP) or an emergency stop signal (ES).

## Revendications

1. Procédé pour commander un frein d'ascenseur comportant un carter (2) et un élément mobile (4, 5) qui est déplacé de manière commandée sur une course entre une position de freinage et une position de départ à l'aide d'une force élastique d'au moins un ressort (3) et d'une force électromagnétique d'au moins une bobine (9),

   caractérisé en ce qu'on produit pour la course entre la position de freinage et la position de départ un profil vitesse/position selon lequel l'élément mobile (4, 5) est commandé.

2. Procédé selon la revendication 1, caractérisé en ce que la position du moment de l'élément mobile (4, 5) est détectée à l'aide de capteurs de course (11, 12) et est corrigée en cas d'écarts par rapport au profil vitesse/position.

3. Procédé selon la revendication 2, caractérisé en ce que dans la position de freinage de l'élément mobile (4, 5), une compensation à zéro du capteur de course (11, 12) est effectuée à l'aide d'un signal offset, et en ce que la résolution du signal de capteur de course se fait en fonction de la course (7) entre la position de freinage et la position de départ.

4. Procédé selon l'une des revendications précédentes, caractérisé en ce qu'un profil force/course est généré en fonction du profil vitesse/course pour la bobine (9), dont la force renforce ou affaiblit la force élastique du ressort (3) en fonction du type d'ordre de freinage et en fonction de la position de l'élément mobile (4, 5).

5. Dispositif de freinage pour la mise en oeuvre du procédé selon les revendications 1 à 4,

   caractérisé en ce qu'il est prévu un ordinateur (20) auquel sont reliés un potentiomètre numérique (19), un convertisseur analogique/numérique (16) et une interface (22) avec un élément de puissance (23) alimentant la bobine (9),

   en ce qu'il est prévu un amplificateur différentiel (15) qui additionne et amplifie le signal offset du potentiomètre numérique (19) et le signal de position du capteur de course (11, 12), et
   en ce que l'amplificateur différentiel (15) est relié, à sa sortie, au convertisseur analogique/numérique (16).

6. Dispositif de freinage selon la revendication 5, caractérisé en ce que l'élément de puissance (23) comporte des paires de commutateurs (24, 26 ; 25, 27) qui sollicitent la bobine (9) avec une tension pour générer une force magnétique influençant la force élastique.

7. Dispositif de freinage selon la revendication 5,

   caractérisé en ce que l'interface (22) est reliée à un commutateur (10) qui surveille la position de sortie de l'élément mobile (4, 5), et

   en ce que l'interface (22) est reliée à une commande d'ascenseur qui déclenche avec un signal de frein (BP) ou un signal d'arrêt d'urgence (ES) le mouvement de l'élément mobile (4, 5).

# Fig. 1

# Fig. 2

EP 0 897 371 B1

## Fig. 3

## Fig. 4

## Fig. 5

## Fig. 6